# EUROPÄISCHE PATENTSCHRIFT

(11) **EP 2 253 452 B1**
(45) Veröffentlichungstag und Bekanntmachung des Hinweises auf die Patenterteilung: **16.12.2015**
(21) Anmeldenummer: 09160539.4
(22) Anmeldetag: 18.05.2009
(51) Int. Cl.: B29C 49/36, B29C 49/42, B29C 49/64, B29C 49/78, B29B 11/14, B29K 67/00, B29L 31/00

(54) **Vorrichtung und Verfahren zum Temperieren von Kunststoffvorformlingen**
Device and method for tempering plastic preforms
Dispositif et procédé d'équilibrage des températures de préformes en matière plastique

(43) Veröffentlichungstag der Anmeldung: 24.11.2010
(73) Patentinhaber: Krones AG, 93073 Neutraubling (DE)
(72) Erfinder: Stoiber, Christian, 93185 Michelsneukirchen (DE); Deyerl, Heinrich, 92552 Teunz (DE); Hirdina, Jochen, 93057 Regensburg (DE); Hüttner, Gerald, 92249 Vilseck (DE)
(74) Vertreter: Bittner, Bernhard

(56) Entgegenhaltungen:
- EP-A2- 0 842 857
- WO-A2-2008/025331
- WO-A2-2008/154503
- DE-A1- 19 757 818
- DE-A1-102007 022 386

## Beschreibung

Die vorliegende Erfindung bezieht sich auf eine Vorrichtung zum Behandeln und insbesondere zum Temperieren bzw. Erwärmen von Kunststoffvorformlingen. Aus dem Stand der Technik ist es bekannt, in zweistufigen Streckblasverfahren Kunststoffbehältnisse aus sogenannten Vorformlingen bzw. Preforms herzustellen. Bei dieser Verarbeitung werden diese Vorformlinge auf eine definierte Prozesstemperatur erwärmt, um den Umformungsvorgang beim Streckblasen zu ermöglichen. Die Erwärmung wird dabei üblicherweise mittels Infrarotstrahlung realisiert. Diese Vorformlinge weisen dabei ein bereits auf Endmaß gefertigtes Mundstück und einen noch zu verformenden Körperbereich auf.

Das zu verarbeitende Material (PET) zeichnet sich dadurch aus, dass es beim Verstrecken zu einer Selbstverfestigung (als strain hardening bezeichnet) kommt. Dabei ist die Umformungstemperatur von großer Bedeutung. Dieser Effekt wird bei der Produktion von PET-Behältern genutzt, um die Wanddickenverteilung des Behälters zu optimieren. Dabei wird nach dem Stand der Technik ein Temperaturprofil, insbesondere über Infrarotstrahlung (oder auch andere Strahlungsquellen) auf den Vorformling aufgebracht. Dabei verformt sich der wärmere Bereich des Vorformlings zuerst und zwar so lange bis der sich durch die Selbstverfestigung ergebende Verstreckungswiderstand größer ist als der Widerstand des benachbarten kälteren Bereichs. Üblicherweise ist das besagte Temperaturprofil um den Umfang gleichmäßig und variiert prozessabhängig in Preform-Längsrichtung. Bei der Produktion von ovalen Behältern wird dieser Effekt jedoch nicht nur mit einer Temperaturschichtung in Längsrichtung genutzt, sondern wird auch durch unterschiedliche Temperaturschichtung um den Umfang auf das Behältnisdesign angepasst. Dieser Prozess ist auch als Preferential-Heating bekannt. Dabei sollen durch spezielle Heiztechnik die stärker zu verstreckenden Seiten stärker erwärmt werden als die schwächer zu verstreckenden Seiten. Diese genannten Heiztechniken sind durch zahlreiche Dokumente beschrieben und zum Teil auch geschützt.

Aus der US 3, 892, 830 ist ein Verfahren zur genauen Temperaturanpassung von wiederbeheizten Vorformlingen bekannt. Dabei werden diejenigen Seiten des Vorformlings, die entlang einer Hauptachse expandiert werden sollen mit strukturierten Fingern berührt, um die Temperatur abzusenken. Die US 3, 632, 13 beschreibt ein Verfahren zum Blasformen unter Verwendung eines langgestreckten ovalen Steckers. Aus der US 5, 869, 110 ist eine Vorrichtung zum Blasformen von Behältnissen bekannt. Diese Vorrichtung weist eine Heizeinrichtung zum Erwärmen eines Vorformlings auf, sowie eine Umformungseinheit, um den Vorformling umzuformen. Weiterhin ist eine Zwischenregion vorgesehen, welche eine Temperaturanpasseinrichtung aufweist, um die Temperatur wenigstens eines Teils einer Oberfläche des Vorformlings anzupassen.

Die DE 695 18 223 T3 beschreibt ebenfalls eine Vorrichtung zur Erwärmung von Vorformlingen. Dabei wird ein Temperatureinstellglied erwähnt, welches kühle Glieder aufweist, die entlang der Achsrichtung des Vorformlings angeordnet sind und unter Verwendung von Zylindern oder dergleichen mit dem Behältnis in Kontakt gebracht werden. Dabei wird hier nur ein leichter Kontakt erreicht, der jedoch das Behältnis nicht verformt. Die EP 0 920 974 A2 beschreibt eine Vorrichtung zum Blasformen von nicht runden Behältnissen ausgehend von einem rotationssymetrischen Vorformling. Dabei weist diese Vorrichtung eine Dreheinrichtung auf, um die Vorformlinge um ihre eigene Achse zu drehen sowie einen Sensor, der eine Winkelposition jedes Vorformlings in einer Erwärmungsstation feststellt.

Aus DE 600 04 894 T2 ist eine Blasformmaschine für Behälter bekannt, die eine Vorrichtung zur Orientierung der Vorformlinge in einem Werkzeug enthält. Die EP 1 279 477 A1 beschreibt eine Vorrichtung und ein Verfahren zum Blasformen von einer Flasche. Dabei werden auch hier die Vorformlinge zwischen einem Heizschritt und einem Blasschritt innerhalb einer Blasform positioniert wobei ein Sensor profilierte Positionen jedes Vorformlings erkennt, so dass diese Bereiche in einer vorgegebenen Orientierung relativ bezüglich der Blasform angeordnet werden.

Die US 5, 101, 990 beschreibt ein Verfahren zum Blasformen von Behältnissen mit beispielsweise ovalen Querschnitten. Dabei werden in den Behältnissen mit radial nach innen gerichteten Rippen erzeugt. Beim einem aus der US 4,151, 249 bekannten Verfahren zum Herstellen von Kunststoffbehältnissen werden nach innen gewölbte Rippen erzeugt. Diese Rippen werden dabei durch berührungsfreies Abkühlen durch Luft in einzelnen Bereichen der Vorformlinge erzeugt.

Aus der EP 0 958 124 B1 sind ein Verfahren und eine Vorrichtung zur Temperierungvon Kunststoffvorformlingen. Dabei werden die Kunstoffvorformlinge entlang einer vorgegebenen Heizstrecke transportiert und dort erwärmt. Um eine unterschiedliche Erwärmung in Umfangsrichtung der Kunststoffvorformlinge zu erreichen, werden diese während des Erwärmungsvorgangs schrittweise mit Bewegung- und Ruhephasen gedreht, damit einige Bereich des Kunsttoffvorformlinge stärker erwärmt werden als andere. Bei dieser schrittweisen Drehung werden die Kunststoffvorformlinge daher um etwa 180° gedreht. Auf diese Weise können in einem einzigen Verfahrensschritt unterschiedlich erwärmte Bereiche des Kunststoffvorformlings in dessen Umfangsrichtung erreicht werden. Diese unterschiedlich erwärmten Bereiche können in einem nachfolgenden Umformungsschritt, beispielsweise in einer Blasformmaschine unterschiedlich verstreckt werden.

Weitere gattungsgemäße Vorrichtungen und Verfahren sind aus DE 97 57 818 A1 und WO 2008/154 530 A2 bekannt.

Bei derartigen Kunststoffbehältnissen besteht jedoch oftmals das Problem, dass auch ein aufzuschraubender Behältnisverschluss ebenfalls nicht kreisförmig ausgebildet ist und daher in ein einer genau definierten Drehstellung auf dem Behältnis sitzen muss.

Der vorliegenden Erfindung liegt daher die Aufgabe zu Grunde, ein neues Konzept zur Verfügung zu stellen, um die Vorformlinge mit einem in Umfangsrichtung variierenden Temperaturprofil zu versehen. Dabei soll insbesondere auch gewährleistet sein, dass anschließend auf die Behältnisse aufgeschraubte Behältnisverschlüsse in einer genau definierten Drehstellung gegenüber dem jeweiligen Flaschenkörper aufgeschraubt werden. Diese sind erfindungsgemäß durch eine Vorrichtung nach Anspruch 1 und ein Verfahren nach Anspruch 9 erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung, welche die Kunststoffvorformlinge entlang eines vorgegebenen Transportpfades transportiert und eine Heizeinrichtung, welche entlang dieses Transportpfades der Kunststoffvorformlinge angeordnet ist und welche die Kunststoffvorformlinge erwärmt, auf, wobei die Vorrichtung die Kunststoffvorformlinge mit einem Temperaturprofil in Umfangsrichtung der Kunststoffvorformlinge versieht und wobei ein Rotationsantrieb vorgesehen ist, der die Kunststoffvorformlinge um deren Längsrichtung dreht. Erfindungsgemäß ist der Rotationsantrieb derart gestaltet, dass er die Gewinde der Kunststoffvorformlinge hinsichtlich ihrer Drehstellung um die Längsrichtung der Behältnisse ausrichtet.

Damit wird erfindungsgemäß eine Vorrichtung vorgeschlagen, welche in Umfangsrichtung ein Temperaturprofil auf der Wandung der Kunststoffvorformlinge erzeugt. Vorzugsweise erwärmt die Heizeinrichtung selbst jedoch die Kunststoffvorformlinge gleichmäßig und bevorzugt wird erst im Anschluss an die Heizeinrichtung das eigentliche Temperaturprofil aufgebracht, indem einzelne Bereiche der Wandung des Kunststoffvorformlings nachtemperiert, beispielsweise gekühlt werden.

Vorteilhaft weist der Rotationsantrieb Motoren und besonders bevorzugt Servomotoren auf, welche die Drehung der Kunststoffvorvormlinge bewirken. So kann beispielsweise ein separater Ausrichtstern vorgesehen sein, der in der Transportrichtung der Kunststoffvorformlinge nach der Heizeinrichtung, und vor einer nachgeschalteten Umformungseinrichtung, wie einer Blasformmaschine angeordnet ist.

Vorteilhaft ist der Rotationsantrieb in der Transportrichtung der Kunststoffvorformlinge stromabwärts bezüglich der Heizeinrichtung angeordnet ist. Dies bedeutet, dass dieser Rotationsantrieb keinerlei Funktion hinsichtlich der ungleichmäßigen Erwärmung der Kunststoffvorformlinge wahrnimmt sondern lediglich die Ausrichtung der Gewinde in eine bestimmte Drehstellung ermöglicht.

Es wäre jedoch auch möglich, dass in der Heizeinrichtung separate Rotationsantriebe für die Kunststoffvorformlinge vorgesehen sind und eine Steuerungseinrichtung bewirkt, dass die Drehung eingestellt wird, sobald sich der Kunststoffvorformling in einer bestimmten Drehstellung befindet.

Bevorzugt weist die Vorrichtung eine Erfassungseinrichtung auf, welche eine Drehstellung des Gewindes der Kunststoffvorformlinge bezüglich der Längsrichtung der Kunststoffvorformlinge erfasst. Vorteilhaft ist auch diese Erfassungseinrichtung in der Transportrichtung der Kunststoffvorformlinge stromaufwärts bezüglich des Rotationsantriebs angeordnet. Dies bedeutet, dass zunächst eine Drehstellung der Gewinde erfasst wird und anschließend der Rotationsantrieb die Kunsttoffvorformlinge dreht, um deren Gewinde auszurichten. Die Heizeinrichtung erwärmt, wie oben erwähnt, vorteilhaft die Kunststoffvorformlinge einheitlich.

Bei einer weiteren vorteilhaften Ausführungsform weist die Vorrichtung in der Transportrichtung stromabwärts bezüglich der Heizeinrichtung eine weitere Temperiereinrichtung zur Beaufschlagung einer Wandung des Kunststoffvorformlings mit einem sich in einer Umfangsrichtung und/oder Längsrichtung und insbesondere in Umfangsrichtung des Kunststoffvorformlings ändernden Temperaturprofil auf. Dies bedeutet, dass das gewünschte Temperaturprofil erst durch diese erwähnte zweite Temperiereinrichtung erzeugt wird. Die Ausrichtung der Kunststoffvorformlinge erfolgt bevorzugt vor der Erzeugung des Temperaturprofils, d.h. bevorzugt ist die Ausrichteinrichtung bzw. der Rotationsantrieb in der Transportrichtung der Behältnisse nach der Heizeinrichtung und vor der zweiten Temperiereinrichtung angeordnet.

Bei einer weiteren vorteilhaften Ausführungsform weist die Vorrichtung eine weitere Rotationseinrichtung auf, welche die Kunststoffvorformlinge während deren Transport durch die Heizeinrichtung um deren Längsachse rotiert. Dies bedeutet, dass diese weitere Rotationseinrichtung die Behältnisse, bevorzugt kontinuierlich um deren Längsachse, dreht, während die Behältnisse durch die Heizeinrichtung gefördert werden. Dieser Rotationsantrieb ist an sich aus dem Stand der Technik bekannt und bewirkt, dass die Kunststoffvorformlinge in Umfangsrichtung gleichmäßig erwärmt werden. Damit ist vorteilhaft diese weitere Rotationseinrichtung in Transporteinrichtung der Kunststoffbehältnisse stromaufwärts bezüglich der oben genannten Rotationseinrichtung angeordnet.

Vorteilhaft weist die Vorrichtung eine erstes Kontaktierungselement zur Beaufschlagung einer Wandlung des Kunststoffvorformlings mit einem sich in einer Umfangsrichtung des Kunststoffvorformlings ändernden Temperaturprofil auf, wobei dieses Kontaktierungselement mit einer Kontaktfläche einen vorgegebenen und in der Umfangsrichtung und/oder Längsrichtung des Kunststoffvorformlings begrenzten Bereich der Wandung des Kunststoffvorformlings berührt um diesen Bereich mit einem gegenüber den von dem Kontaktierungselement nicht berührten Bereichen unterschiedlichen Temperaturprofilen zu beaufschlagen, und wobei die Vorrichtung eine Zustelleinrichtung aufweist welche das Kontaktierungselement in einer vorgegebenen Richtung auf den Kunststoffvorformling zustellt.

Unter einer Transportvorrichtung wird jegliche Einrichtung verstanden, welche die Kunststoffvorformlinge transportiert, hier beispielsweise an einem Träger oder einer Transportkette angeordnete Greifklammern, welche die Vorformlinge an einem Tragring greifen oder auch Dorne, welche in die Kunststoffvorformlinge bzw. deren Mündungen eingreifen.

Weiterhin findet über das Kontaktierungselement vorteilhaft eine tatsächliche Berührung des Kunststoffvorformlings statt, was sich von den aus dem Stand der Technik bekannten Vorrichtungen unterscheidet. Üblicherweise wird im Stand der Technik eine Berührung des Kunststoffvorformlings vermieden, um diesen nicht vor dem eigentlichen Blasvorgang zu verformen. Bevorzugt kühlt das Kontaktierungselement den vorgegebenen Bereich des Kunststoffvorformlings.

Vorzugsweise wird das Kontaktierungselement zumindest auch in einer radialen Richtung bezüglich des Kunststoffvorformlings zugestellt. Dabei wäre es möglich, das zwei derartige Kontaktierungselemente in einer genau radialen Richtung auf den Kunststoffvorformling zugestellt werden, es könnte jedoch auch ein klammerartiger Mechanismus vorgesehen sein, der das Kontaktierungselement um einen vorgegebenen Schwenkpunkt bewegt, damit jedoch auch in einer radialen Richtung auf den Kunststoffvorformling zu bewegt.

Es wird damit ein neuartiges Konzept vorgestellt, um die Temperaturschichtung auf den Kunststoffvorformling aufzubringen. Dieses Konzept unterscheidet sich in mehrerlei Hinsicht von den bisherigen Verfahren, da die besagte Temperaturschichtung in Längsrichtung nicht über ein unterschiedliches Aufheizen sondern über eine gerichtete Abkühlung (in axialer und/oder horizontaler Richtung) erfolgt. Dabei werden die gewünschten Bereiche des Kunststoffvorformlings gezielt über einen Kontakt mit dem Kontaktierungselement, welches beispielsweise als temperierte Formplatte ausgeführt sein kann, gekühlt.

Vorteilhaft wird in einem Übergabestern eine Kühlstrecke, beispielsweise in Form eines KühlKanals durch Kühlsegmente aufgebaut. Durch die Strahlungskälte wird der Kunststoffvorformling (bevorzugt an seiner Aussenseite) gekühlt und damit ein "Preferntial Cooling" erzeugt. Dabei kann die Kühlwirkung auch über die Verweilzeit in dem Kühlkanal, die Maschinenleistung und Menge sowie die Länge der aktiven Kühlsegmente oder die Kühlleistung beeinflusst werden. Es wäre dabei abweichend von der vorliegenden Erfindung auch möglich, diese Kühlung über eine berührungslose Aussenkühlung zu bewirken. Auch durch die Größe des besagten Übergabesterns kann die Kühlleistung bzw. Kühlzeit beeinflusst werden.

Bei einer bevorzugten Ausführungsform ist die Größe des Bereichs, entlang dessen die Kontaktfläche den Kunststoffvorformling berührt, in Abhängigkeit von der geometrischen Form des herzustellenden Behältnisses gewählt. Genauer gesagt wurde in umfangreichen Studien ermittelt, dass die Größe dieses Bereichs besonders bevorzugt in Abhängigkeit von einem Seitenverhältnis zwischen den langen und kurzen Seiten der herzustellenden Flasche gewählt werden sollte. Dabei steigt besonders bevorzugt die genannte Berührfläche, d.h. die Größe des Bereichs mit einem größer werdenden Verhältnis zwischen den Seitenlängen des herzustellenden Behältnisses. So wurde beispielsweise festgestellt, dass bei einem Seitenverhältnis der fertigen Flasche, welches zwischen 1,2 :1 und 1,5:1 liegt, ein prozentualer Anteil der Berührfläche zwischen 10 % und 70 % bevorzugt zwischen 20 % und 60 % liegen sollte. Bei einem Seitenverhältnis zwischen 1,5:1 und 1,7:1 liegt die Berührfläche vorteilhaft zwischen 40 % und 80 % und besonders bevorzugt zwischen 50 % und 70 %.

Bei einem Seitenverhältnis, welches zwischen 1,7:1 und 2:1 liegt, liegt die besagte Berührfläche zwischen 50 % und 90 %, bevorzugt zwischen 60 % und 85 %. Dies bedeutet, dass jedenfalls bei größer werdenden Seitenverhältnisse auch der prozentuale Anteil der Berührfläche ansteigt.

Bei einer weiteren vorteilhaften Ausführungsform ist die Temperatur der Kontaktfläche veränderbar. So ist es beispielsweise möglich, dass innerhalb des Kontaktierungselements Flüssigkeitskanäle angeordnet sind, durch welche eine Kühlflüssigkeit geleitet werden kann. Auch wären andere Vorgehensweisen wie beispielsweise Peltier - Elemente denkbar, um die Kontaktmittel beziehungsweise die Kontaktfläche abzukühlen. Der erwähnte Kühleffekt kann damit über den mechanisch bedingten Berührflächen und über eine einstellbare Plattentemperatur beziehungsweise Temperatur der Kontaktflächen geregelt werden. Auch wäre es möglich, dass die Kontaktierungselemente bestimmte Bereiche des Vorformlings zusätzlich erwärmen, damit diese besser verstreckt werden können.

Bei einer weiteren vorteilhaften Ausführungsform kontaktiert das Kontaktierungselement eine Außenwandung der Kunststoffvorformlinge. Es wäre jedoch auch möglich, dass insbesondere bei Behältnissen mit größerem Querschnitt das Kontaktierungselement an eine Innenwand der Kunststoffvorformlinge angelegt wird. Bevorzugt ist jedoch die Kontaktierung der Außenwandungen der Kunststoffvorformlinge.

Bei einer weiteren vorteilhaften Ausführungsform bewirkt das Kontaktierungselement wenigstens zeitweise eine Verformung des Kunststoffbehältnisses. Bei dieser Ausführungsform wird bewusst eine mindest leichte Quetschung des Kunststoffvorformlings gewünscht. Auf diese Weise kann ein flächiger Kontakt zwischen dem Kunststoffvorformling unter dem Kontaktierungselement sicher gestellt werden. So ist es beispielsweise möglich, dass zwei Kontaktierungselemente vorgesehen sind und ein minimaler Abstand dieser beiden Kontaktierungselemente geringer ist als ein Außenradius des Kunststoffbehältnisses. Vorteilhaft ist ein Anpressdruck des Kontaktierungselements gegenüber dem Kunststoffvorformling veränderbar. Diese Veränderbarkeit beziehungsweise Einstellbarkeit des Anpressdruckes führt dazu, dass auch mit einer definierten Quetschung des Kunststoffvorformlings gearbeitet werden kann.

Vorzugsweise weist die Vorrichtung ein zweites Kontaktierungselement auf, welches einen zweiten und in der Umfangsrichtung des Kunststoffvorformlings begrenzten Bereich der Wandung des Kunststoffvorformlings kontaktiert. Dabei ist es möglich, dass sich diese beiden Kontaktierungselemente bezüglich des Kunststoffvorformlings gegenüberstehen und diesen in einem geschlossenen Zustand zwischen sich einklemmen.

Bei einer besonders bevorzugten Ausführungsform weist die Vorrichtung eine Klammervorrichtung auf, welche die Kontaktierungselemente enthält und die Kontaktflächen auf den Kunststoffvorformling zustellt. Diese Klammereinrichtung, welche beispielsweise über Führungskurven betätigt werden kann stellt eine besonders günstige Ausführungsform dar, um den Kunststoffvorformling an vorbestimmten Positionen zu kühlen. Bevorzugt kann dabei eine Vielzahl derartiger Klammereinrichtungen auf einem Trägerrad angeordnet sein und an diese Klammereinrichtungen werden die Kunststoffvorformlinge übergeben. Dabei ist es möglich, dass auf dem Trägerrad eine Halteeinrichtung vorgesehen ist, welche beispielsweise die Kunststoffvorformlinge an deren Mündungen greift und zusätzlich in der Längsrichtung der Kunststoffvorformlinge versetzt hierzu die einzelnen Klammereinrichtungen, welche eine Kühlung der Wandung der Kunststoffvorformlinge und insbesondere der Außenwandungen bewirken.

Bevorzugt ist wenigstens ein Kontaktierungselement um eine vorgegebene Schwenkachse schwenkbar. Besonders bevorzugt sind beide Kontaktierungselemente jeweils um vorgegebene Schwenkachsen schwenkbar, wobei diese Schwenkachsen nicht zusammenfallen und besonders vorteilhaft parallel nebeneinander sind. Die Schwenkachsen können jedoch auch zusammenfallen. Vorteilhaft ist eine Vielzahl derartiger Klammereinrichtungen auf einem drehbaren Träger angeordnet.

Bei einer weiteren vorteilhaften Ausführungsform weist die Vorrichtung ein Kontaktierungselement in Form eines Bodenelements auf, welches den Boden des Kunststoffvorformlings zu dessen Temperierung kontaktiert und diesen insbesondere ebenfalls kühlt. Auf diese Weise kann eine gezielte Ausprägung eines Bodenabschnitts des fertigen Behältnisses erreicht werden. Dieses Bodenelement ist dabei bevorzugt auch zum Blasen von sogenannten Petaloidböden geeignet. Die Bewegung des Bodenelements kann dabei an eine Bewegung der oben genannten Kontaktierungselemente gekoppelt sein. Auch wäre es möglich, dass ein derartiges Bodenelement durch eine separate Ansteuerung beispielsweise von unten mittels einer Kurve oder eines Elektromotors und/oder eines pneumatischen oder hydraulischen Antriebs auf den Kunststoffvorformling zugestellt wird. Es wird darauf hingewiesen, dass dieses Bodenelement auch unabhängig von den oben erwähnten Kontaktierungselementen eingesetzt werden kann, dass also insbesondere nur eine Temperierung bzw. Kühlung des Bodenbereichs des Kunststoffvorformlings vorgenommen wird. In diesem Fall kann dieses Kontaktierungselement auch umlaufend ausgebildet sein, so dass der Kontaktbereich nur in der Längsrichtung begrenzt ist.

Weiterhin wäre es auch möglich, dass eine Klammereinrichtung einerseits die Kontaktierungselemente aufweist, andererseits jedoch an diesen Kontaktierelementen auch Bodenabschnitte angeordnet sind, welche einen Boden der Kunststoffvorformlinge kontaktieren. So könnte beispielsweise in den Böden aller Klammereinrichtungen ein Ring angeordnet sein. Dieser Ring könnte später zur Stabilisierung des Bodens dienen und auch bei dem fertig hergestellten Behältnis als sogenannter Aufstellring wieder zu finden sein, der einen Bereich mit einer größeren Wandstärke definiert.

Weiterhin könnte eine Klammereinrichtung mehrteilig ausgebildet sein, d.h. in Längsrichtung des Kunststoffvorformlings könnten mehrere Kontaktierungselemente übereinander angeordnet sein.

Bei einer weiteren vorteilhaften Ausführungsform ist die Kontaktfläche der Kontaktierungselemente gekrümmt. Genauer gesagt kann diese Kontaktfläche individuell gestaltet sein. Bei einer Ausführungsform weist sie den gleichen Radius auf, wie der Kunststoffvorformling an seiner Aussenoberfläche. Es wäre jedoch auch möglich, dass der Krümmungsradius der Kontaktfläche geringfügig größer ist als der Krümmungsradius des Kunststoffvorformlings, damit sich im Falle einer gewissen Quetschung die Wandung des Kunststoffvorformlings einfacher an den nunmehr vergrößerten Krümmungsradius der Kontaktfläche anlegen kann.

Bei einer weiteren vorteilhaften Ausführungsform weist die Vorrichtung ein der Heizeinrichtung auf dem Transportpfad der Behältnisse nachgeschaltetes Kühlmodul auf und die Kontaktierungselemente sind Bestandteil dieses Kühlmoduls. Dies bedeutet, dass hier zunächst die Behältnisse aufgeheizt werden und dann an vorgegebenen Positionen gekühlt werden. Dabei sind die Kontaktieruntgselemente bevorzugt Bestandteil dieses Kühlmoduls. So wäre es möglich, dass die Behältnisse zunächst aufgeheizt werden und dann beispielsweise in einer Vielzahl von auf einem Trägerrad angeordneten Transporteinrichtung transportiert werden und während dieses Transports an vorbestimmten Positionen gekühlt werden.
Die Kontaktierungselemente können auch derart ausgebildet sein, dass sie zusätzliche Stege in den Behältnissen erzeugen, die nicht in der (nachfolgenden) Blasform enthalten sind.

Bei der erfindungsgemäßen Ausführungsform ist dabei, wie erwähnt auch eine Ausrichteinrichtung vorgesehen, welche eine Drehstellung der Kunststoffvorformlinge bzgl. Ihrer Längsrichtung auf eine vorbestimmte Position hin ausrichtet. Dies ist insbesondere bei solchen Behältnissen interessant, welche nicht nur eine ovale Gestalt aufweisen, sondern bei denen auch ein Schraubverschluss an einer genau definierten Drehposition anzufinden ist. In diesem Falle müssen die Kunststoffvorformlinge vor dem eigentlichen Kühlen in eine bestimmte Drehposition in einer Längsrichtung ausgerichtet werden. Eine derartige Ausrichteinrichtung kann dabei ein Sensorelement aufweisen, welches bestimmte Positionen der Mündung beziehungsweise eines Gewindes erkennt und den Kunststoffvorformling auf diese Positionen ausrichtet.

Die vorliegende Erfindung ist weiterhin auf eine Anlage zur Herstellung von Kunststoffbehältnissen gerichtet, welche eine Vorrichtung der oben beschriebenen Art aufweist, so wie eine dieser Vorrichtungen in einer Transportrichtung der Kunststoffvorformlinge nachgeordnete Umformungseinrichtung zur Umformung von Kunststoffvorformlingen in Kunststoffbehältnisse. Dies bedeutet, dass die erwärmten und bereichsweise gekühlten Kunststoffvorformlinge anschließend in einer Umformungseinheit, wie beispielsweise einer Blasformmaschine, zu Kunststoffbehältnissen expandiert werden.

Die vorliegende Erfindung ist weiterhin auf ein Verfahren zur Temperierung von Kunststoffvorformlingen gerichtet, wobei die Kunststoffvorformlinge zur Blasformung in Behältnisse vorgesehen sind und bei dem der Kunststoffvorformling entlang eines Umfangs mit einem Temperaturprofil versehen wird, das dadurch erzeugt wird, dass sich in Richtung einer Längsachse des Kunststoffvorformlings im Bereich einer Vorformlingswandung erstreckende streifenförmige Bereiche unterschiedlich temperiert werden und bei dem eine Temperierung zur thermischen Konditionierung unterschiedlicher Bereiche des Kunststoffvorformlings durchgeführt wird. Erfindungsgemäß wird eine Rotation des Kunststoffvorformlings zur Ausrichtung einer Drehstellung eines Gewindes des Kunststoffvorformlings durchgeführt.

Im Gegensatz zu dem oben beschriebenen Stand der Technik findet bei dem erfindungsgemäßen Verfahren die Temperierung in zwei aufeinanderfolgenden Schritten statt und nicht in einer Heizeinrichtung. Genauer wird zunächst eine einheitliche Erwärmung des Kunststoffvorformlings durchgeführt und anschließend werden einige der Bereiche des Kunststoffvorformlings weiter temperiert und insbesondere gekühlt.

Vorteilhaft erfolgt die Rotation des Kunststoffvorformlings zu dessen Ausrichtung unabhängig von dessen Temperierung. Dabei erfolgt die Ausrichtung vorteilhaft nach dessen einheitlicher Erwärmung. Bevorzugt findet die Ausrichtung zeitlich unabhängig von der Erwärmung statt, jedenfalls jedoch verfahrensmäßig unabhängig, d.h. der Dreh- und Heizvorgang sind nicht aufeinander abgestimmt.

Bei einem vorteilhaften Verfahren erfolgt eine Drehung des Kunststoffvorformlings um einen vorgegebenen Drehwinkel wobei dieser Drehwinkel von einem ganzzahligen Vielfachen von 180° abweicht. Vorteilhaft wird der Kunststoffvorformling zu dessen Ausrichtung nur einmal um seine Längsachse gedreht, wobei der entsprechende Drehwinkel von der Iststellung des Gewindes des Kunststoffvorformlings und dessen Sollstellung abhängt.

Vorteilhaft erfolgt nur eine einmalige Drehung der Kunstoffvorformlinge nach deren Erwärmung erfolgt. Vorteilhaft werden jedoch die Kunststoffvorformlinge während ihrer Erwärmung auch kontinuierlich gedreht. Dies bedeutet, dass der Kunsttoffvorformling zunächst einheitlich entlang seines Umfangs erwärmt und anschließend durch Rotation ausgerichtet wird.

Bei einem weiteren vorteilhaften Verfahren wird eine Drehstellung des Gewindes des Kunststoffvorformlings erfasst und besonders bevorzugt wird diese Drehstellung vor oder während der Ausrichtung des Kunststoffvorformlings erfasst.

Bevorzugt wird nach der einheitlichen Erwärmung des Kunsttoffvorformlings wenigstens ein erstes Kontaktierungselement auf den Kunststoffvorformling zugestellt und kontaktiert mit einer Kontaktfläche einen vorgegebenen und in der Umfangsrichtung und/oder Längsrichtung der Kunststoffvorformlinge begrenzten Bereich einer Wandung des Kunststoffvorformlings, um diesen Bereich mit einem gegenüber von dem Kontaktierungselement nicht berührten Bereichen unterschiedlichen Temperaturprofil zu beaufschlagen.

Damit wird auch hier verfahrensseitig vorgeschlagen, dass die Kunststoffvorformlinge vorteilhaft an einer Wandung und insbesondere an einer Aussenwandung kontaktiert werden und an diesen entsprechenden Stellen nicht, wie im Stand der Technik teilweise üblich, erwärmt sondern gekühlt werden. Vorteilhaft werden die Kunststoffvorformlinge zunächst in ihrer Gesamtheit und bevorzugt gleichmäßig erwärmt und anschließend partiell abgekühlt. Vorzugsweise kühlt die Kontaktfläche den begrenzten Bereich des Kunststoffvorformlings.

Weitere vorteilhafte Ausführungsformen ergeben sich aus den beigefügten Zeichnungen.

Darin zeigen:
- Fig. 1: Eine Übersichtsdarstellung einer Vorrichtung zum Umformen von Kunststoffvorformlingen;
- Fig. 2a: eine schematische Darstellung einer erfindungsgemäßen Vorrichtung;
- Fig. 2b: eine weitere grob schematische Darstellung einer erfindungsgemäßen Vorrichtung;
- Fig. 3a: ein Modul zum bereichsweise Kühlen der Kunststoffvorformlinge;
- Fig. 3b: das Modul aus Fig. 3a bei abgenommenem Gehäuse;
- Fig. 4a - 4c: drei Darstellungen einer Kontaktierungseinheit;
- Fig. 5a - 5c: drei Darstellungen eines Kontaktierungselements;
- Fig. 6a - 6b: zwei Darstellungen zur Veranschaulichung der Kontaktierung;
- Fig. 7a - 7c: drei weitere mögliche Darstellungen zur Veranschaulichung einer Kontaktierung des Kunststoffvorformlings;
- Fig. 8a - 8b: zwei Darstellungen der Kontaktierung eines Bodenbereichs eines Kunststoffvorformlings;
- Fig. 9: eine Darstellung zur Veranschaulichung eines Bodens eines Behältnisses;
- Fig. 10a - 10c: drei Darstellungen von hergestellten Behältnissen;
- Fig. 11a - 11 c: drei weitere Darstellungen eines hergestellten Kunststoffbehältnisses;
- Fig. 12a - 12c: drei weitere Darstellungen eines hergestellen Kunststoffbehältnisses.

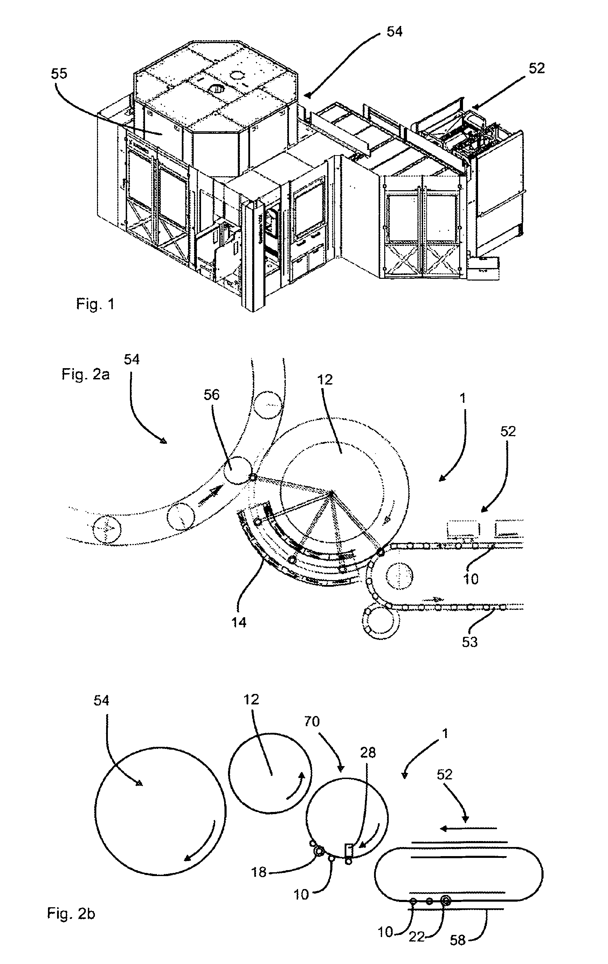

Figur 1 zeigt eine schematische Darstellung einer Vorrichtung zum Umformen von Kunststoffvorformlingen. Dabei bezieht sich dieses Bezugszeichen 54 auf die eigentliche Blasformeinheit, wie beispielsweise eine Blasformmaschine und das Bezugszeichen 55 auf ein Gehäuse. Das Bezugszeichen 52 kennzeichnet in seiner Gesamtheit eine Heizeinrichtung, welche die Kunststoffvorformlinge erwärmt.

Figur 2a zeigt eine schematische Darstellung einer erfindungsgemäßen Vorrichtung. Dabei ist auch hier wieder die Heizeinrichtung 52 vorgesehen, durch welche die Kunststoffvorformlinge 10 mit Hilfe eines Transportmittels, hier einer Transportkette 53, hindurch gefördert und einheitlich (mit Ausnahme des Gewindebereichs) erwärmt werden. An diese Heizeinrichtung 52 schließt sich ein Trägerrad 12 an, welches die Kunststoffvorformlinge 10 übernimmt und durch eine (nur schematisch dargestellte) Kühlstrecke 14 transportiert, entlang derer die Kunststoffvorformlinge bereichsweise gekühlt werden. An diese Kühlstrecke schließt sich die Blasformeinheit 54 auf, welche eine Vielzahl von Blasstationen 56 aufweist, in denen die Kunsttoffvorformlinge zu Kunststoffbehältnissen expandiert werden. Die Heizeinrichtung 52 und die Kühlstrecke 14 bilden gemeinsam die erfindungsgemäße Vorrichtung 1.

Fig 2b zeigt eine weitere grob schematische Darstellung einer erfindungsgemäßen Vorrichtung. Dabei ist auch hier zunächst wieder die Heizeinrichtung 52 vorgesehen, welche Heizelemente 58 aufweist, zwischen denen die Kunststoffvorformlinge 10 hindurch transportiert werden. Dabei werden die Kunststoffvorformlinge, wie im Stand der Technik bekannt, von einer weiteren (nur schematisch dargestellten) Rotationseinrichtung 58 kontinuierlich und bevorzugt mit konstanter Geschwindigkeit um ihre eigene Achse gedreht um auf diese Weise gleichmäßig an ihrem Aussenumfang erwärmt zu werden.

An die Heizeinrichtung 52 schießt sich eine in ihrer Gesamtheit mit 70 bezeichnete Ausrichteinrichtung an, mittels derer die Kunststoffvorformlinge ausgerichtet werden. Genauer ist hier zunächst eine Erfassungseinrichtung 28 wie eine Kamera vorgesehen, welche eine Drehstellung der Mündungen der Kunststoffvorformlinge 10 erfasst. Weiterhin ist eine Vielzahl von Rotationseinrichtungen vorgesehen (nur eine schematisch dargestellt), welche die Kunststoffvorformlinge um ihre Längsrichtung dreht, um diese auszurichten. Genauer wird hier die Gewindestellung gegenüber dem zu erzeugenden nicht kreisförmigen, beispielsweise elliptischen Behältniskörper ausgerichtet. In diesem Bereich findet keine Temperierung des Kunststoffvorformlings statt.

An diese Ausrichteinrichtung schließt sich das Trägerrad 12 an, an dem die Kunststoffvorformlinge bereichsweise gekühlt werden können.

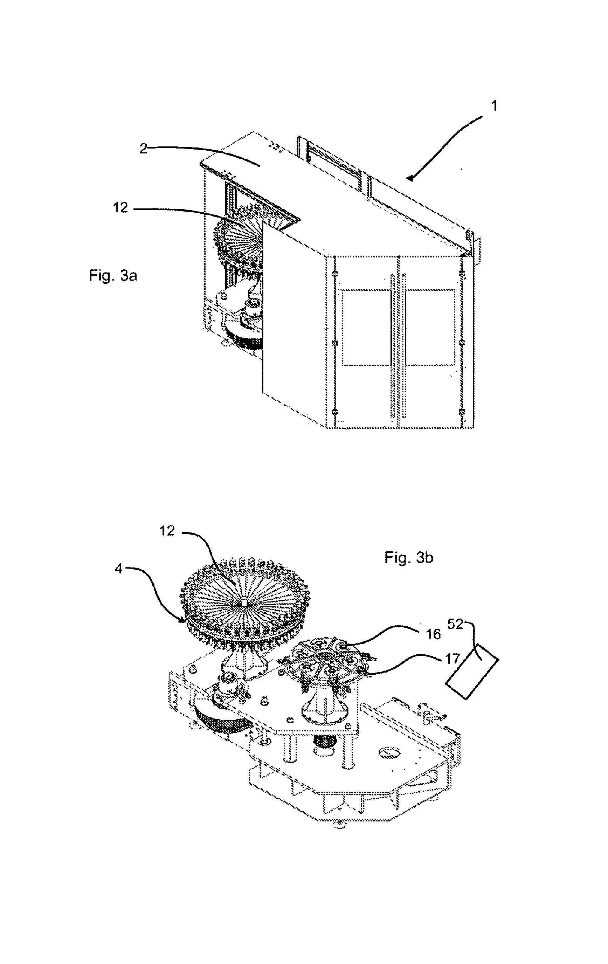

Die Figuren 3a und 3b zeigen eine erfindungsgemäße Vorrichtung 1. Dabei ist bei der in Figur 2 gezeigten Darstellung ein Gehäuse 2 gezeigt, welches bei der in Figur 3 gezeigten Darstellung zur besseren Übersichtlichkeit entfernt wurde. Diese Vorrichtung weist ein Trägerrad 12 auf, an dem eine Vielzahl von Kontaktierungselementen 4 vorgesehen ist, die sich damit entlang einer kreisförmigen Linie bewegen.

Das Bezugszeichen 16 kennzeichnet einen Zuführstern, der die Vorformlinge dem Trägerrad 12, d.h. den einzelnen Kontaktierungselementen 4 zuführt. An diesem Zubehörstern 16 ist ebenfalls eine Vielzahl von Greifelementen 17, wie Greifklammern, angeordnet. Stromaufwärts bezüglich dieses Übergabesterns 16 kann eine nur schematisch dargestellte Heizeinrichtung 52 vorgesehen sein, die beispielsweise als Durchlaufofen ausgeführt ist, durch den die Vorformlinge hindurch geführt werden. Die Drehbewegungen des Zuführsterns 16 und des Trägers 12 können dabei beispielsweise mittels Getrieben aufeinander synchronisiert sein. Es wäre jedoch auch möglich, das jeweils geregelte Antriebsmotoren zum Antrieb dieser beiden Einrichtungen vorgesehen sind. Das Trägerrad 12 ist Bestandteil der Transporteinrichtung zum Transportieren der Kunststoffvorformlinge.

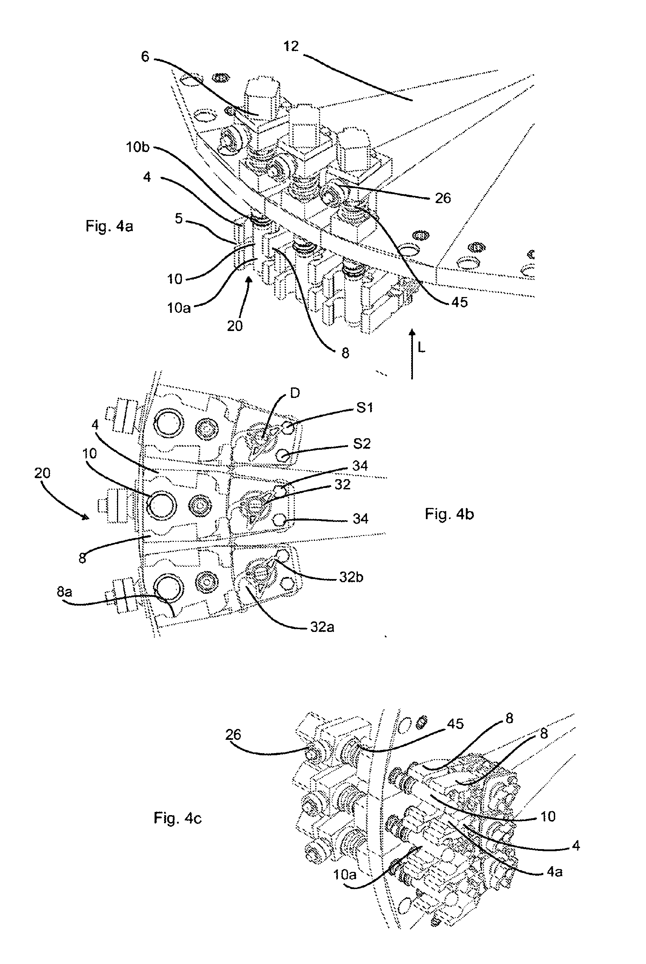

Figur 4a zeigt eine Detaildarstellung des Trägers 12, an dem eine Vielzahl von Kontaktierungseinrichtungen 20 (hier nur drei gezeigt) angeordnet sind. Diese Kontaktierungseinrichtungen, 20, genauer, deren Kontaktierungselemente, kontaktieren dabei jeweils die Kunststoffvorformlinge 10 in einem Körperbereich 10a. Ein Gewinde 10b der Kunststoffvorformlinge wird dabei vorzugsweise nicht berührt. Das Bezugszeichen 6 bezieht sich auf eine optional vorhandene Ausrichteinrichtung, wie beispielsweise einen Drehantrieb, der die Kunststoffvorformlinge 10 um deren Längsachse dreht. Mittels einer Kurvenrolle 26 kann der Kunststoffvorformling entlang seiner Längsrichtung L verschoben und mittels einer Federungseinrichtung 45 vorgespannt werden.

Die einzelnen Kontaktierungseinrichtungen 20 weisen jeweils zwei Kontaktierungselemente 4, 8 auf, welche den Kunststoffvorformling hier von zwei Seiten her berühren, um ihn zu kühlen. Die Kontaktierungseinrichtungen 20 stellen damit auch die eingangs Zustelleinrichtungen dar, welche die Kontaktierungselemente auf den Kunststoffvorformling zustellen. In der in den Figuren dargestellten Ausführungsform sind die Kontaktierungseinrichtungen 20 jeweils als Klammereinrichtungen ausgeführt.

Die Kontaktierungskörper 4 beziehungsweise 8 sind hier zweiteilig ausgebildet, d.h. sie weisen einen Spalt 5 zwischen sich auf. Vorzugsweise sind die einzelnen Kontaktierungskörper 4 temperierbar und insbesondere in Figur 4a auch die oberen und unteren Kontaktierungselemente 4 beziehungsweise 8 unterschiedlich temperierbar. So wäre es beispielsweise möglich, dass das untere Kontaktierungselement kühler gehalten wird als das obere Kontaktierungselement. Daneben könnten auch bestimmte Bereiche der Kontaktierungselemente unterschiedlich temperiert werden.

Weiterhin wäre es möglich, dass die Innenflächen der Kontaktierungselementen 4, 8 austauschbar ausgebildet sind. In einer entsprechenden Halterung beziehungsweise einem Außenteil der Kontaktierkörper können beispielsweise Temperierbohrungen oder auch Heizelemente angebracht sein. Die Wärme dieser Heizelemente kann dabei durch den Kontakt zwischen dem Außenteil und dem eigentlichen Kontaktierungselement übertragen werden. Mittels der Aussparung 5 kann auch der Kontaktierkörper 4, 8 an dessen jeweiligem Träger angeordnet werden.

Figur 4b zeigt eine Draufsicht von unten auf die auch in Figur 4a gezeigte Klammereinrichtung 20. Dabei ist ein Schalthebel beziehungsweise Schaltnocken 32 zu erkennen, der eine vordere Ausnehmung 32a und eine hintere Anschlagfläche 32b aufweist. Mittels dieser beiden Anschlagflächen kann der Schaltnocken 32 um seine Drehachse D geschwenkt werden, wobei hierzu beispielsweise entsprechende (feststehende) Führungskurven einsetzbar sind.
Durch ein Schwenken dieses Schaltnockens 32 wird ein Öffnen beziehungsweise Schließen der Klammereinrichtung 20 beziehungsweise ein aufeinander zu und voneinander wegbewegen der Kontaktierungselemente 4, 8 erreicht. Die Ausnehmung 32a des Schaltnockens 32, die hier halbmondförmig ausgebildet ist, ist für sehr große Schaltwinkel vorgesehen. Auf diese Weise kann ein feststehender Steuerbolzen (nicht gezeigt), der in die Nocke eingreift, diese Nocke 32 viel weiter drehen. Die Schwenkachsen S1 und S2 der beiden Kontaktierungselemente 4. 8 sind hier in dem Bereich der Sechskantschrauben 34 vorgesehen.

Figur 4c zeigt eine Seitendarstellung der in Figur 4a gezeigten Anordnung. Man erkennt auch hier wieder die Kontaktierungselemente 8 und 4, die sich an die Außenwandung 10a der Vorformlinge anlegen. Bei der in den Figuren 4a bis 4c gezeigten Ausführungsform legen sich die Kontaktierungselemente 4, 8 mit ihren Kontaktflächen 4a, 8a flächig an die Vorformlinge an. Hiervon abweichend oder zusätzlich können die Kontaktierungselemente jedoch auch den Vorformling derart kontaktieren beziehungsweise quetschen, dass zusätzliche Stege in diesen eingebracht werden, die nicht in der Blasform enthalten sind. Bei diesen Stegen kann es sich beispielsweise um in Längsrichtung des Vorformlings verlaufende Stege aber auch um horizontale oder schräg verlaufende oder gekrümmte Stege handeln. Auf diese Weise können sehr leichte Flaschen produziert werden, ohne dass hierzu eine Rillengeometrie zur Stabilisierung benötigt wird.

Eine Versteifung erfolgt hier über eine unterschiedliche Materialverteilung und nicht über Flaschendesign-Elemente. Die Anbringung derartiger Rillengeometrien ist sowohl bei runden als auch bei nicht runden Behältern möglich. Weiterhin wäre es auch möglich, Querrippen in der Art eines Pinches (ein beispielsweise umlaufender Ring in dem Körper des Behältnisses) anzubringen oder auch Längsrippen vorzusehen, welche die Belastbarkeit in Längsrichtung des Behältnisses erhöhen.

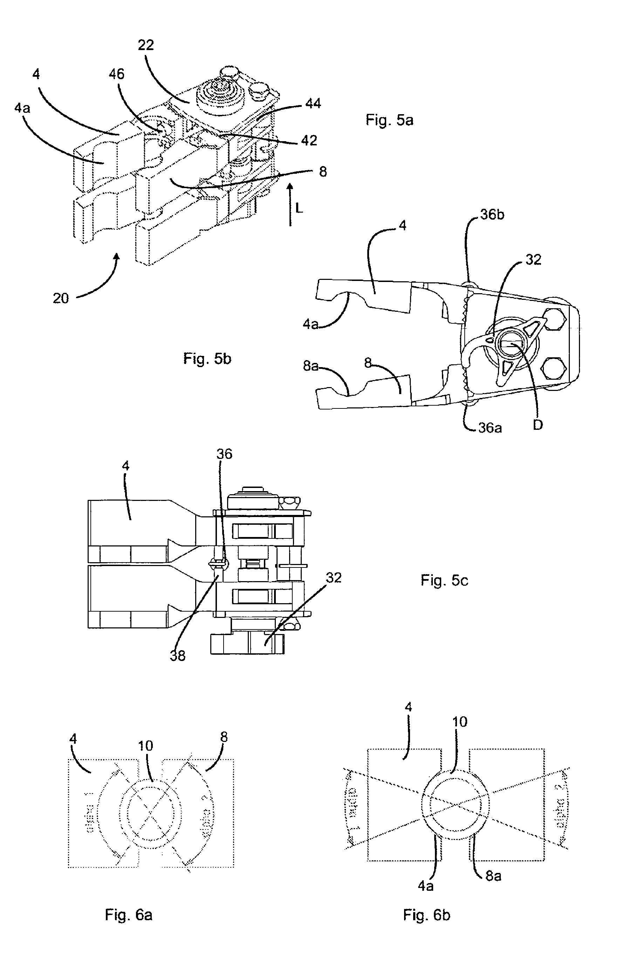

Figur 5a zeigt eine einzelne Klammereinrichtung 20. Dabei erkennt man, dass die beiden Kontaktierungselemente 4 und 8 über eine Verbindungsstelle 42 an jeweiligen Trägern 44 angeordnet sind. Genauer sind diese Kontaktierungselemente in der Längsrichtung L jeweils herausziehbar und können so durch andere Kontaktierungselemente ersetzt werden. Das Bezugszeichen 46 bezieht sich auf eine Befestigungseinrichtung wie eine Schraube, um die Kontaktierungselemente an den jeweiligen schwenkbaren Trägern 44 anzuschrauben.

Figur 5b zeigt eine Draufsicht von unten auf eine Klammereinrichtung 20. Wie erwähnt, kann hierbei der Schaltnocken 32 um seine Achse D geschwenkt beziehungsweise gedreht werden. Im Inneren der Klammereinrichtung und insbesondere zwischen den beiden Kontaktierungselementen 4 und 8 ist ein weiterer (nicht gezeigter) Schaltnocken vorgesehen. Dieser Teil, der zwischen den Kontaktierungselementen sitzt, ist oval beziehungsweise wie eine Passfeder ausgeprägt. Wenn er quer steht, bleibt die Klammereinrichtung 20 offen, d.h. die beiden Kontaktierungselemente 4 und 8, und damit auch die entsprechenden Kontaktflächen 4a und 8a weisen den maximalen Abstand zueinander auf. Wenn der besagte Nocken über einen gewissen Todpunkt gedreht wird, bleibt die Klammereinrichtung 20 offen. Um die Klammer wieder zu schließen, wird der Nocken wieder über den Todpunkt zurück gedreht und die beiden Kontaktierungselemente schließen automatisch. Zum Schließen dieser Kontaktierungselemente ist eine Federeinrichtung vorgesehen, von der hier jedoch lediglich zwei Federbügel 36a und 36b erkennbar sind, welche die beiden Kontaktierungselemente 4 und 8 über eine Spannkraft zusammen drücken. Ein Bereich an den Klammerenden ist vorzugsweise federnd ausgeführt, so dass der Totpunkt übergangen werden kann.

Figur 5c zeigt eine Seitendarstellung der Klammereinrichtung 20. Man erkennt hier wiederum die Federeinrichtung 36, welche die beiden Kontaktierungselemente 4 und 8 zusammen zieht. Dabei können die beiden Kontaktierungselemente 4 und 8 über einen Quersteg 38 miteinander verbunden sein, so dass deren Bewegungen aneinander gekoppelt sind.

Die Figuren 6a und 6b zeigen zwei Darstellungen zur Veranschaulichung eines Kontaktierungsvorganges des Vorformlings. Bei der in Figur 4a gezeigten Darstellung findet eine etwas stärkere Quetschung des Vorformlings statt, als bei der in Figur 6b gezeigten Darstellung. Die Berührfläche zwischen den Kontaktierungselementen und dem Kunststoffvorformling 10 kann auf unterschiedliche Weise beeinflusst werden. So ist es möglich, dass wie in Figur 6a gezeigt, die Kontaktfläche 4a genau auf den Vorformling 10 angepasst ist, oder, wie in Figur 6b gezeigt mit unterschiedlichen Quetschwegen auf den gewünschten Umschlingungswinkel eingestellt wird.

Bevorzugt wird eine Kombination aus den beiden in Figur 6a und 6b gezeigten Varianten gewählt, d.h. es wird vorzugsweise eine Grobeinstellung über eine Formgebung der Kontaktflächen vorgegeben und ein Feinjustieren erfolgt über einen Quetschweg. Man erkennt, dass auch bei der in Figur 6b gezeigten Darstellung eine zumindest geringfügige Verformung des Vorformlings auftritt. Vorzugsweise tritt eine Quetschung des Kunststoffvorformlings auf, die zwischen 0,05mm und 0,8mm, bevorzugt zwischen 0,1mm und 0,4mm im Radius beträgt.

Vorzugsweise werden diejenigen Flächen des Kunststoffvorformlings 10a, der von den Kontaktflächen 4a und 8a berührt wird, gleichzeitig gekühlt. Es wird jedoch erwähnt, dass auch im Wege einer inversen Vorgehensweise eine Aufwärmung dieses Bereichs vorgenommen wird.

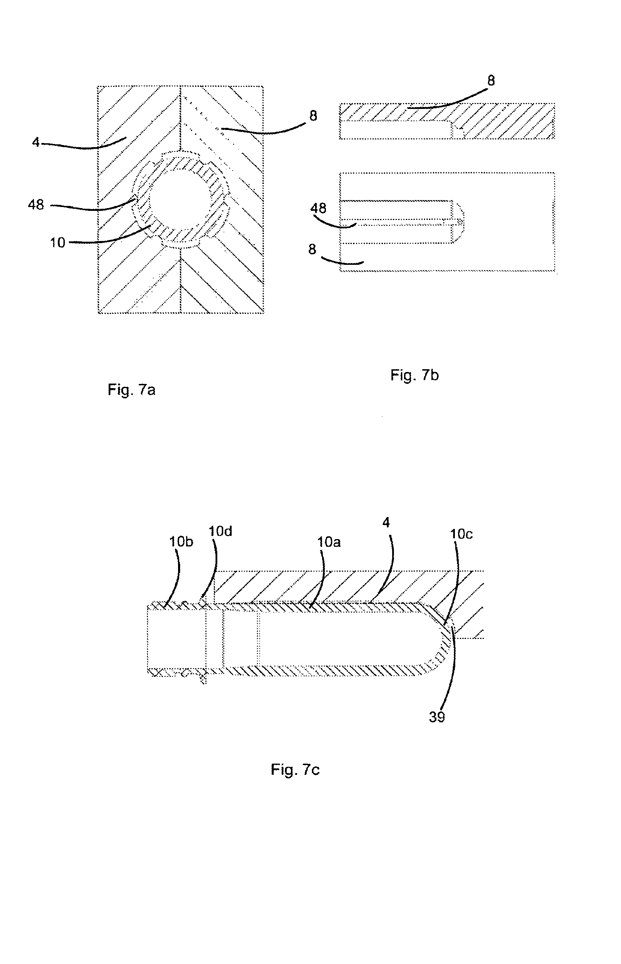

Die Figuren 7a - 7c zeigen drei weitere Darstellungen, um verstärkte Bereiche in den Vorformling einzubringen. Bei der in Figur 7a gezeigten Darstellung sind zwei Kontaktierungselemente 4, 8 dargestellt, die jeweils langgestreckte Vorsprünge 48 aufweisen, welche in den Außenumfang bzw. die Außenwandung des Kunststoffvorformlings 10 in einem geschlossenen Zustand hineinragen. Damit wird auch hier eine zumindest lokale Quetschung des Vorformlings bewirkt.

Auf diese Weise können Längsrippen (insbesondere in Form von Materialanhäufungen) des Kunststoffvorformlings erzeugt werden. In Figur 7b sind zwei Darstellungen eines auch in Figur 7a gezeigten Kontaktierungselementes 8 gezeigt. Hier erkennt man insbesondere auch die Längsrippe 48, die hier kurz vor der Position des Anspritzpunktes (nicht gezeigt) eines Kunststoffbehältnisses ändert.

Diese Rippe 48 ragt hier auf jedem Fall in den Boden des Kunststoffvorformlings hinein. Auch ist hier dargestellt, dass das Kontaktierungselement auch vollständig um den Boden des Vorformlings schließt, so dass auch dieser gegebenenfalls gekühlt werden kann. Das Bodenteil ist hier also in den seitlich zuzustellenden Kontaktierungselementen enthalten. Grundsätzlich ist es möglich, dass die Klammereinrichtung 20 mit beliebig vielen seitlich zustellbaren Kontaktierungselementen arbeiten kann und zusätzlich ein ggfs. auch mehrteiliges Bodenteil (beispielsweise zum Blasen von Petaloidböden) aufweisen kann. Diese mehereren Kontaktierungselemente können dabei auch unabhängig voneinander zustellbar bzw. bewegbar sein.

Wie erwähnt, können in dem Kontaktierungselement Kühlmittelkanäle angeordnet sein, welche einen Kühlmitteldurchfluss durch die Kontaktierungselemente 4, 8 erlauben. Figur 7c zeigt eine weitere Darstellung, in der auch ein Kunststoffvorformling dargestellt ist. Bei der in den Figuren 7a bis 7c gezeigten Darstellung berührt das Kontaktierungselement lediglich den Körperbereich 10a des Kunststoffvorformlings 10. Zusätzlich wäre es jedoch auch möglich, dass ein Bereich des Kontaktierungselements, insbesondere wenn dieses zum Kühlen dient, auch an einem Gewindebereich beziehungsweise Halsbereich (Tragring plus Gewinde) des Behältnisses anliegt, so dass dieser mit der Klammer noch weiter gekühlt werden kann. Auf diese Weise kann man kurz vor dem eigentlichen Blasvorgang einen sehr großen Temperaturunterschied zwischen dem Tragring 10d des Kunststoffvorformlings 10 und dem Bereich direkt darunter realisieren, so dass auch aus dem Bereich direkt unter dem Tragring 10d sehr viel Material abgezogen werden kann aber der Tragring 10d durch seine Festigkeit beziehungsweise niedrige Temperatur nicht verformt wird. Das Bezugszeichen 39 kennzeichnet eine Aussparung unterhalb eines Anspritzpunktes des Kunststoffvorformlings.

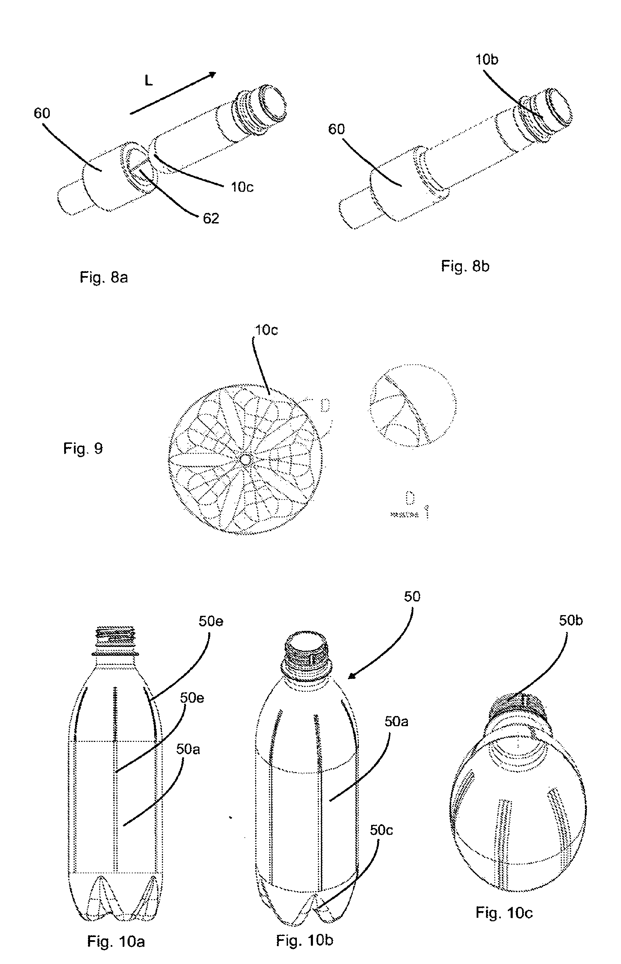

Die Figuren 8a und 8b zeigen eine weitere Darstellung der erfindungsgemäßen Vorrichtung. Hier ist ein Kontaktierungselement 60 vorgesehen, welches speziell zur Temperierung des Bodenbereichs 10c des Behältnisses dient. Auch in diesem Kontaktierungselement 60, welches hier in Längsrichtung L auf den Vorformling zugestellt werden kann, können Rippen 62 vorgesehen sein, welche sich anschließend in dem blasgeformten Behältnis als Materialanhäufung wiederfinden, ohne das hierzu in der entsprechenden Blasform derartige Rippenausbildungen vorhanden sein müssen. In Figur 8b ist ein Zustand gezeigt, in dem das Kontaktierungselement 60 den Kunststoffvorformling 10 kontaktiert. Dieses Kontaktierungselement 60 kann dabei auch durch eine separate Ansteuerung wie eine feststehende Führungskurve oder auch einen motorischen, pneumatischen oder hydraulischen Antrieb zustellbar sein.

Figur 9 zeigt ein Beispiel für eine Ausprägung eines Bodens eines Kunststoffvorformlings beziehungsweise eines Kunststoffbehältnisses.

In den Figuren 10a bis 10c ist ein gefertigtes Behältnis 50 gezeigt. Man erkennt, dass dieses Behältnis 50 an seinem Körper 50a eine Vielzahl von Längsrippen 50e aufweist, die sich damit in der Längsrichtung I des Behältnisses erstrecken. Diese Längsrippen können dabei durch das hier im Rahmen der vorliegenden Erfindung beschriebene vorzugsweise Kühlen des Behältnisses erreicht werden.

Auch die Ausprägung des Bodens 50c des Behältnisses 50 kann durch die Ausgestaltung des in den Figuren 8a und 8b gezeigten Kontaktierungselements gefördert werden. Das Gewinde 50b bleibt, wie oben erwähnt, von dem eigentlichen Umformungsvorgang unbeeinflusst.

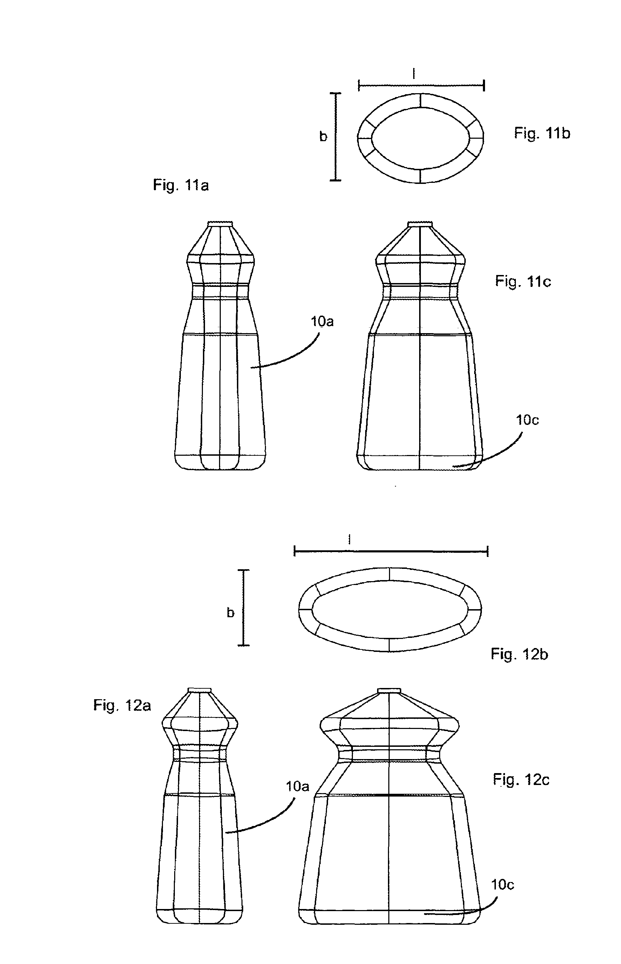

Die Figuren 11a bis 11c beziehungsweise 12a bis 12c zeigen Darstellungen zweier unterschiedlicher Behältnisse. Die in den Figuren 11a bis 11c und 12a bis 12c gezeigten Behältnisse unterscheiden sich insbesondere hinsichtlich des Verhältnisses zwischen ihrer Längsausdehnung I und Breitenausdehnung b. Dieses Verhältnis liegt bei dem in den Figuren 11a bis 11c gezeigten Behältnis bei ca. 1:1,5 und bei den in den Figuren 12a bis 12c gezeigten Behältnis bei ca. 1:2. Entsprechend werden zur Erzeugung des in den Figuren 11a bis 11c gezeigten Behältnisses kleinere Kontaktflächen der Kontaktierungselemente an dem Kunststoffvorformling verwendet, als bei dem in den Figuren 12a bis 12c gezeigten Kunststoffbehältnis. Zur Erzeugung der in 11a bis 11c gezeigten Behältnisses kann beispielsweise durch die Kontaktierungselemente eine Gesamtfläche in einem Bereich von 80 % des Kunststoffvorformlings berührt werden, wo hingegen der entsprechende Anteil der Kontaktierungsfläche im Fall des in Figuren 11a bis 11c gezeigten Behältnisses bei ca. 40 % liegen kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Gehäuse
- 4: Kontaktierungselement
- 4a: Kontaktfläche
- 5: Aussparung/Spalt
- 6: Ausrichteinrichtung
- 8: Kontaktierungselement
- 8a: Kontaktfläche
- 10: Kunststoffvorformlinge
- 10a: Körperbereich/Außenwandung
- 10b: Gewinde
- 10c: Bodenbereich Behältnis
- 10d: Tragring
- 12: Träger/Trägerrad
- 14: Kühlstrecke
- 16: Zuführstern/Übergabestern
- 17: Greifelement

- 18: Rotationseinrichtung
- 20: Kontaktierungseinrichtung/Klammereinrichtung
- 22: weitere Rotationseinrichtung
- 24: Erfassungseinrichtung
- 26: Kurvenrolle
- 28: Erfassungseinrichtung
- 32: Schaltnocken/Schalthebel
- 32a: Vordere Ausnehmehmung Schaltnocken
- 32b: Anschlagfläche
- 34: Sechskantschrauben
- 36: Federeinrichtung
- 36a: Federbügel
- 36b: Federbügel
- 38: Quersteg
- 39: Aussparung
- 42: Verbindungsstelle
- 44: Träger
- 45: Federungseinrichtung
- 46: Befestigungseinrichtung (z.B. Schraube)/
- 48: Vorsprünge/Längsrippe
- 50: gefertigtes Behältnis
- 50a: Körper des Behältnisses 50
- 50b: Gewinde
- 50c: Boden des Behältnisses
- 50e: Längsrippen
- 52: Heizeinrichtung
- 53: Transportmittel
- 54: Blasformeinheit
- 55: Gehäuse
- 56: Blasstation
- 58: weitere Rotationseinrichtung
- 60: Kontaktierungselement
- 62: Rippen
- 70: Ausrichteinrichtung

- L: Längsrichtung
- D: Drehachse
- I: Längsausdehnung
- b: Breitenausdehnung
- S1, S2: Schwenkachsen

## Patentansprüche

1. Vorrichtung (1) zum Erwärmen von Kunststoffvorformlingen (10), mit einer Transporteinrichtung, welche die Kunststoffvorformlinge (10) entlang eines vorgegebenen Transportpfades transportiert, und mit einer Heizeinrichtung (52), welche entlang dieses Transportpfades der Kunststoffvorformlinge (10) angeordnet ist und welche die Kunststoffvorformlinge (10) erwärmt, wobei die Vorrichtung (1) die Kunststoffvorformlinge mit einem Temperaturprofil in Umfangsrichtung der Kunststoffvorformlinge (10) versieht und wobei ein Rotationsantrieb (18) vorgesehen ist, der die Kunststoffvorformlinge um deren Längsrichtung (L) dreht,
**dadurch gekennzeichnet, dass**
der Rotationsantrieb (18) in der Transportrichtung der Kunststoffvorformlinge stromabwärts bezüglich der Heizeinrichtung (52) angeordnet ist und derart gestaltet ist, dass er die Gewinde (10b) der Kunststoffvorformlinge hinsichtlich ihrer Drehstellung um die Längsrichtung (L) der Behältnisse ausrichtet und die Vorrichtung (1) in der Transportrichtung stromabwärts bezüglich der Heizeinrichtung (52) eine weitere Temperiereinrichtung zur Beaufschlagung einer Wandung (10a) des Kunststoffvorformlings mit einem sich in einer Umfangsrichtung und/oder Längsrichtung des Kunststoffvorformlings (10) ändernden Temperaturprofil aufweist.

2. Vorrichtung (1) nach Anspruch 1,
**dadurch gekennzeichnet, dass**
die Vorrichtung (1) eine Erfassungseinrichtung (28) aufweist, welche eine Drehstellung des Gewindes der Kunststoffvorformlinge (10) bezüglich der Längsrichtung (L) der Kunststoffvorformlinge erfasst.

3. Vorrichtung (1) nach wenigstens einem der vorangegangenen Ansprüche,
**dadurch gekennzeichnet, dass**
die Vorrichtung (1) eine weitere Rotationseinrichtung (58) aufweist, welche die Kunststoffvorformlinge während deren Transport durch die Heizeinrichtung (52) um deren Längsachse rotiert.

4. Vorrichtung (1) nach wenigstens einem der vorangegangene Ansprüche,
**dadurch gekennzeichnet, dass**
die Vorrichtung (1) wenigstens ein erstes stromabwärts bezüglich der Heizeinrichtung (52) angeordnetes Kontaktierungselement (4, 60) zur Beaufschlagung einer Wandung (10a) des Kunststoffvorformlings mit einem sich in einer Umfangsrichtung und/oder Längsrichtung des Kunststoffvorformlings (10) ändernden Temperaturprofil aufweist, welches Kontaktierungselement (4, 60) mit einer Kontaktfläche (4a) einen vorgegebenen und in der Umfangsrichtung und/oder Längsrichtung der Kunststoffvorformlinge (10) begrenzten Bereich der Wandung (10a) des Kunststoffvorformlings (10) berührt, um diesen Bereich mit einem gegenüber von dem Kontaktierungselement (4, 60) nicht berührten Bereichen unterschiedlichen Temperaturprofil zu beaufschlagen und die Vorrichtung (1) eine Zustelleinrichtung aufweist, welche das Kontaktierungselement (4, 60) in einer vorgegebenen Richtung auf den Kunststoffvorformling (10) zustellt.

5. Vorrichtung (1) nach wenigstens einem der vorangegangenen Ansprüche,
**dadurch gekennzeichnet, dass**
die Vorrichtung (1) ein zweites Kontaktierungselement (8) aufweist, welches einen zweiten und in der Umfangsrichtung der Kunststoffvorformlinge (10) begrenzten Bereich der Wandung (10a) des Kunststoffvorformlings (10) kontaktiert.

6. Anlage zur Herstellung von Kunststoffbehältnissen mit einer Vorrichtung (1) nach wenigstens einem der vorangegangenen Ansprüche und einer dieser Vorrichtung in einer Transportrichtung der Kunststoffvorformlinge (10) nachgeordneten Umformungseinrichtung (54) zur Umformung von Kunststoffvorformlingen (10) in Kunststoffbehältnisse (50).

7. Verfahren zur Temperierung von Kunststoffvorformlingen, wobei die Kunststoffvorformlinge (10) zur Blasformung in Behältnisse vorgesehen sind und bei dem der Kunststoffvorformling entlang eines Umfangs mit einem Temperaturprofil versehen wird, das dadurch erzeugt wird, dass sich in Richtung einer Längsachse des Kunststoffvorformlings im Bereich einer Vorformlingswandung erstreckende streifenförmige Bereiche unterschiedlich temperiert werden und bei dem eine Temperierung zur thermischen Konditionierung unterschiedlicher Bereiche des Kunststoffvorformlings (10) durchgeführt wird,
**dadurch gekennzeichnet, dass**
eine Rotation des Kunststoffvorformlings (10) zur Ausrichtung einer Drehstellung eines Gewindes des Kunststoffvorformlings in der Transportrichtung der Kunststoffvorformlinge stromabwärts bezüglich einer Heizeinrichtung (52) durchgeführt wird und die unterschiedliche Temperierung stromabwärts bezüglich einer Heizeinrichtung (52) erfolgt, welche entlang dieses Transportpfades der Kunststoffvorformlinge (10) angeordnet ist und welche die Kunststoffvorformlinge (10) erwärmt.

8. Verfahren nach Anspruch 7,
**dadurch gekennzeichnet, dass**
die Rotation des Kunststoffvorformlings unabhängig von dessen Temperierung erfolgt.

9. Verfahren nach Anspruch 8,
**dadurch gekennzeichnet, dass**
eine Drehung des Kunststoffvorformlings um einen vorgegebenen Drehwinkel erfolgt, wobei dieser Drehwinkel von einem ganzzahligen Vielfachen von 180° abweicht.

10. Verfahren nach wenigstens einem der Ansprüche 7 - 9,
**dadurch gekennzeichnet, dass**
eine nur einmalige Drehung der Kunststoffvorformlinge nach deren Erwärmung erfolgt.

11. Verfahren nach Anspruch 10,
**dadurch gekennzeichnet, dass**
der Kunststoffvorformling zunächst einheitlich entlang seines Umfangs erwärmt und anschließend durch Rotation ausgerichtet wird.

12. Verfahren nach wenigstens einem der Ansprüche 7 - 11,
**dadurch gekennzeichnet, dass**
eine Drehstellung des Gewindes des Kunststoffvorformlings erfasst wird.

13. Verfahren nach wenigstens einem der Ansprüche 7 - 12
**dadurch gekennzeichnet, dass**
nach der einheitlichen Erwärmung des Kunststoffvorformlings (10) wenigstens ein erstes Kontaktierungselement (4, 60) auf den Kunststoffvorformling (10) zugestellt wird und mit einer Kontaktfläche (4a) einen vorgegebenen und in der Umfangsrichtung und/oder Längsrichtung (L) der Kunststoffvorformlinge (10) begrenzten Bereich einer Wandung (10a) des Kunststoffvorformlings (10) kontaktiert, um diesen Bereich mit einem gegenüber von dem Kontaktierungselement (4, 60) nicht berührten Bereichen unterschiedlichen Temperaturprofil zu beaufschlagen.

## Claims

1. Apparatus (1) for heating plastics material preforms (10), having a transport device which transports the plastics material preforms (10) along a predefined transport path and having a heating device (52) which is arranged along said transport path for the plastics material preforms (10) and which heats the plastics material preforms (10), wherein the apparatus (1) provides the plastics material preforms with a temperature profile in the circumferential direction of the plastics material preforms (10) and wherein a rotary drive (18) is provided which rotates the plastics material preforms about their longitudinal direction (L), **characterized in that** the rotary drive (18) is arranged downstream of the heating device (52) in the transport direction of the plastics material preforms and is configured in such a way that it orients the threads (10b) of the plastics material preforms in terms of their rotary position about the longitudinal direction (L) of the containers and the apparatus (1) has, downstream of the heating device (52) in the transport direction, a further tempering device for applying to a wall (10a) of the plastics material preform a temperature profile which varies in a circumferential direction and/or longitudinal direction of the plastics material preform (10).

2. Apparatus (1) according to claim 1, **characterized in that** the apparatus (1) has a detection device (28) which detects a rotary position of the thread of the plastics material preforms (10) relative to the longitudinal direction (L) of the plastics material preforms.

3. Apparatus (1) according to at least one of the preceding claims, **characterized in that** the apparatus (1) has a further rotary device (58) which rotates the plastics material preforms about their longitudinal axis while they are transported through the heating device (52).

4. Apparatus (1) according to at least one of the preceding claims, **characterized in that** the apparatus (1) has at least a first contacting element (4, 60), arranged downstream of the heating device (52), for applying to a wall (10a) of the plastics material preform a temperature profile which varies in a circumferential direction and/or longitudinal direction of the plastics material preform (10), which contacting element (4, 60) makes contact, by a contact surface (4a), with a predefined region of the wall (10a) of the plastics material preform (10), said predefined region being delimited in the circumferential direction and/or longitudinal direction of the plastics material preforms (10), in order to apply to said region a different temperature profile in comparison to regions with which the contacting element (4, 60) does not make contact, and the apparatus (1) has an advancing device which advances the contacting element (4, 60) in a predefined direction towards the plastics material preform (10).

5. Apparatus (1) according to at least one of the preceding claims, **characterized in that** the apparatus (1) has a second contacting element (8) which makes contact with a second region of the wall (10a) of the plastics material preform (10), said second region being delimited in the circumferential direction of the plastics material preforms (10).

6. System for producing plastics material containers, having an apparatus (1) according to at least one of the preceding claims and a transforming device (54), arranged downstream of said apparatus in a transport direction of the plastics material preforms (10), for transforming plastics material preforms (10) into plastics material containers (50).

7. Method for controlling the temperature of plastics material preforms, wherein the plastics material preforms (10) are intended to be blow-moulded to form containers and in which the plastics material preform is provided along a circumference with a temperature profile that is generated in that strip-shaped regions extending in the direction of a longitudinal axis of the plastics material preform in the region of a preform wall are differently temperature-controlled and in which a tempering is carried out for the thermal conditioning of different regions of the plastics material preform (10), **characterized in that** a rotation of the plastics material preform (10) is carried out downstream of a heating device (52) in the transport direction of the plastics material preforms in order to orient a rotary position of a thread of the plastics material preform and the different tempering takes place downstream of a heating device (52) which is arranged along said transport path of the plastics material preforms (10) and which heats the plastics material preforms (10).

8. Method according to claim 7, **characterized in that** the rotation of the plastics material preform takes place independently of the tempering thereof.

9. Method according to claim 8, **characterized in that** the plastics material preform is rotated through a predefined angle of rotation, said angle of rotation differing from a whole-numbered multiple of 180°.

10. Method according to at least one of claims 7 to 9, **characterized in that** the plastics material preforms are rotated just once after they have been heated.

11. Method according to claim 10, **characterized in that** the plastics material preform is first heated uniformly along its circumference and then is oriented by rotation.

12. Method according to at least one of claims 7 to 11, **characterized in that** a rotary position of the thread of the plastics material preform is detected.

13. Method according to at least one of claims 7 to 12, **characterized in that**, after the uniform heating of the plastics material preform (10), at least a first contacting element (4, 60) is advanced towards the plastics material preform (10) and makes contact, by a contact surface (4a), with a predefined region of a wall (10a) of the plastics material preform (10), said predefined region being delimited in the circumferential direction and/or longitudinal direction (L) of the plastics material preforms (10), in order to apply to said region a different temperature profile in comparison to regions with which the contacting element (4, 60) does not make contact.

## Revendications

1. Système (1) pour le chauffage de préformes en matière plastique (10), avec un dispositif de transport convoyant les préformes en matière plastique (10) le long d'un chemin de transport défini, et avec un dispositif de chauffage (52) disposé le long dudit chemin de transport des préformes en matière plastique (10) et chauffant les préformes en matière plastique (10), ledit système (1) affectant aux préformes en matière plastique un profil de température dans la direction périphérique des préformes en matière plastique (10), et où est prévu un entraînement rotatif (18) qui tourne les préformes en matière plastique autour de leur direction longitudinale (L),
**caractérisé en ce que**
l'entraînement rotatif (18) est disposé en aval du dispositif de chauffage (52) dans la direction de transport des préformes en matière plastique et est configuré de manière à ajuster les filets (10b) des préformes en matière plastique autour de la direction longitudinale (L) des récipients par rapport à la position de rotation de ceux-ci, et **en ce que** le système (1) comporte, en aval du dispositif de chauffage (52) dans la direction de transport, un autre dispositif de thermorégulation pour soumettre une paroi (10a) de la préforme en matière plastique à un profil de température variable dans la direction périphérique et/ou la direction longitudinale de la préforme en matière plastique (10).

2. Système (1) selon la revendication 1,
**caractérisé en ce que**
ledit système (1) comporte un dispositif de détection (28) qui détecte une position de rotation du filet des préformes en matière plastique (10) par rapport à la direction longitudinale (L) des préformes en matière plastique.

3. Système (1) selon au moins une des revendications précédentes,
**caractérisé en ce que**
ledit système (1) comporte un autre dispositif de rotation (58) qui tourne les préformes en matière plastique autour de leur axe longitudinal pendant leur transport au travers du dispositif de chauffage (52).

4. Système (1) selon au moins une des revendications précédentes,
**caractérisé en ce que**
ledit système (1) comporte au moins un premier élément de contact (4, 60) disposé en aval du dispositif de chauffage (52) pour soumettre une paroi (10a) de la préforme en matière plastique à un profil de température variable dans la direction périphérique et/ou la direction longitudinale de la préforme en matière plastique (10), ledit élément de contact (4, 60) touchant par une surface de contact (4a) une zone définie de la paroi (10a) de la préforme en matière plastique (10), limitée en direction périphérique et/ou en direction longitudinale des préformes en matière plastique (10), pour soumettre ladite zone à un profil de température différencié par rapport aux zones non touchées par l'élément de contact (4, 60), et **en ce que** ledit système (1) comporte un dispositif d'avance qui avance l'élément de contact (4, 60) vers la préforme en matière plastique (10) dans une direction définie.

5. Système (1) selon au moins une des revendications précédentes,
**caractérisé en ce que**
ledit système (1) comporte un deuxième élément de contact (8) qui contacte une deuxième zone de la paroi (10a) de la préforme en matière plastique (10) limitée en direction périphérique des préformes en matière plastique (10).

6. Installation pour la fabrication de récipients en matière plastique avec un système (1) selon au moins une des revendications précédentes et un dispositif de déformation (54) disposé en aval dudit système dans une direction de transport des préformes en matière plastique (10), pour la transformation des préformes en matière plastique (10) en récipients en matière plastique (50).

7. Procédé de thermorégulation de préformes en matière plastique, où les préformes en matière plastique (10) sont prévues pour être transformées en récipients par soufflage, et où il est prévu un profil de température le long de la périphérie de la préforme en matière plastique, lequel est généré par le fait que des zones en forme de bande s'étendant dans la zone d'une paroi de préforme, dans la direction d'un axe longitudinal de la préforme en matière plastique, sont thermorégulées de manière différenciée, et où une thermorégulation est effectuée pour le conditionnement thermique de différentes zones de la préforme en matière plastique (10),
**caractérisé en ce qu'**
une rotation de la préforme en matière plastique (10) est exécutée pour l'ajustement d'une position de rotation d'un filet de la préforme en matière plastique en aval par rapport à un dispositif de chauffage (52) dans la direction de transport des préformes en matière plastique, et **en ce que** la thermorégulation différenciée se produit en aval par rapport à un dispositif de chauffage (52) disposé le long dudit chemin de transport des préformes en matière plastique (10) et chauffant les préformes en matière plastique (10).

8. Procédé selon la revendication 7, **caractérisé en ce que** la rotation de la préforme en matière plastique se produit indépendamment de sa thermorégulation.

9. Procédé selon la revendication 8, **caractérisé en ce qu'**une rotation de la préforme en matière plastique est effectuée suivant un angle de rotation défini, dans lequel ledit angle de rotation diffère d'un multiple entier de 180°.

10. Procédé selon au moins une des revendications 7 à 9, **caractérisé en ce qu'**une seule rotation simple des préformes en matière plastique est effectuée après le chauffage de celles-ci.

11. Procédé selon la revendication 10, **caractérisé en ce que** la préforme en matière plastique est d'abord chauffée de manière homogène sur sa périphérie, puis est ajustée par rotation.

12. Procédé selon au moins une des revendications 7 à 11, **caractérisé en ce qu'**une position de rotation du filet de la préforme en matière plastique est détectée.

13. Procédé selon au moins une des revendications 7 à 12, **caractérisé en ce qu'**après le chauffage homogène de la préforme en matière plastique (10), au moins un premier élément de contact (4, 60) est avancé vers la préforme en matière plastique (10) et touche par une surface de contact (4a) une zone définie d'une paroi (10a) de la préforme en matière plastique (10), limitée en direction périphérique et/ou en direction longitudinale (L) des préformes en matière plastique (10), pour soumettre ladite zone à un profil de température différencié par rapport aux zones non touchées par l'élément de contact (4, 60).
